# EUROPÄISCHE PATENTSCHRIFT

(11) **EP 0 754 132 B1**
(45) Veröffentlichungstag und Bekanntmachung des Hinweises auf die Patenterteilung: **02.05.2003**
(21) Anmeldenummer: 95911341.6
(22) Anmeldetag: 17.03.1995
(51) Int. Cl.: B60R 7/04, B60R 7/12

(54) **AUFBEWAHRUNGSVORRICHTUNG, INSBESONDERE FÜR REGENSCHIRME, ZUM EINBAU IN KRAFTFAHRZEUGE**
STOWAGE COMPARTMENT, IN PARTICULAR FOR AN UMBRELLA, DESIGNED TO BE FITTED IN A MOTOR VEHICLE
SYSTEME DE RANGEMENT, NOTAMMENT POUR PARAPLUIES, A MONTER DANS UNE AUTOMOBILE

(30) Priorität: 06.04.1994 CH 99394
(43) Veröffentlichungstag der Anmeldung: 22.01.1997
(73) Patentinhaber: fischerwerke Artur Fischer GmbH & Co. KG, 72178 Waldachtal (DE)
(72) Erfinder: ACKERET, Peter, CH-8700 Küsnacht (CH)
(86) Internationale Anmeldenummer: EP9501000
(87) Internationale Veröffentlichungsnummer: WO95027634

(56) Entgegenhaltungen:
- CH-A- 363 250
- DE-B- 1 094 132
- FR-A- 2 449 420
- GB-A- 2 177 056
- US-A- 1 694 855
- US-A- 4 543 971

## Beschreibung

Die vorliegende Erfindung betrifft eine Aufbewahrungsvorrichtung, insbesondere für Regenschirme, zum Einbau in eine Fahrzeugtüre in einem Kraftfahrzeug (Kfz).

Wegen ihrer Grösse werden Regenschirme meist auf dem Rücksitz oder der Hutablage abgelegt, was jedoch nur bei trockenen Regenschirmen zweckmässig ist.

Nasse Regenschirme werden normalerweise auf den Boden hinter dem Fahrer- bzw. Beifahrersitz oder vor dem Beifahrersitz gelegt. Dies ist jedoch nur zweckmässig, wenn die Rücksitze bzw. der Beifahrersitz unbenützt sind. Oft werden daher nasse Regenschirme auch im Kofferraum untergebracht, was jedoch dazu führt, dass der Benützer verregnet wird.

Nebst der Gefahr von Beschädigungen eines auf dem Boden liegenden Regenschirmes durch Fahrgäste, insbesondere beim Ein- und Aussteigen, wird bei der Handhabung nasser Regenschirme nebst den Innenausstattung des Kfz. meist auch der Benützer benetzt, was ebenfalls unerwünscht ist.

Um zu verhindern, dass der Benützer beim Verlassen des Kfz verregnet wird, sollte der Regenschirm im Kfz so untergebracht werden können, dass er in der Sitzposition erfasst und nach dem Oeffnen der Fahrzeugtüre aufgespannt werden kann, bevor das Kfz verlassen wird.

Beim Einsteigen ins Kfz sollte der Regenschirm erst zugeklappt werden müssen, nachdem der Benützer auf seinem Sitz Platz genommen hat.

Dies bedingt, dass die Aufbewahrungsvorrichtung im Kfz so angeordnet ist, dass der Regenschirm durch den Benützer aus seiner Sitzposition bequem in die Aufbewahrungsvorrichtung eingelegt bzw. aus dieser entnommen werden kann.

Dabei sollten bei nassem Regenschirm weder der Benützer noch die Innenausstattung des Kfz benetzt werden.

Im aufbewahrten Zustand sollte der Regenschirm vor Beschädigungen, Schmutz und Staub geschützt und möglichst unsichtbar im Kfz untergebracht sein.

Ferner sollte das Tropfwasser eines nassen Regenschirms in der Aufbewahrungsvorrichtung aufgefangen und aus dem Kfz abgeleitet werden können.

Die Aufbewahrungsvorrichtung sollte ohne grundlegende Änderungen am Fahrzeugkonzept unter Berücksichtigung der verschiedenartigen Platzverhältnisse und Ausstattungswünsche bei den einzelnen Fahrzeugmodellen mit minimalen konstruktiven Anpassungen in einen bestehenden Leerraum integrierbar sein.

Aus der US-PS 4 543 971 ist eine Aufbewahrungsvorrichtung für Regenschirme bekannt, die zum Einbau in eine Fahrzeugtüre eines Kraftfahrzeugs vorgesehen ist. Die bekannte Aufbewahrungsvorrichtung wird vertikal stehend in die Fahrzeugtüre eingebaut. Sie weist ein Federelement auf, das den Regenschirm nach oben schiebt, so dass er ergriffen werden kann. Zum Verstauen wird der Regenschirm gegen die Kraft des Federelements nach unten gedrückt und von einer entriegelbaren Verriegelungseinrichtung in der unteren Stellung gehalten.

Aufgabe der vorliegenden Erfindung ist die Schaffung einer Aufbewahrungsvorrichtung, insbesondere für Regenschirme, zum Einbau in eine Fahrzeugtüre eines Kraftfahrzeugs, die den Regenschirm beim Schließen der Fahrzeugtür selbsttätig in eine Aufbewahrungsstellung bewegt.

Die gemäss der Erfindung zur Lösung dieser Aufgabe vorgesehenen Merkmale sind im Patentanspruch 1 genannt.

Die erfindungsgemäße Aufbewahrungsvorrichtung ist zum Einbau in ein Aufnahmefach in einer Fahrzeugtüre eines Kraftfahrzeugs vorgesehen. Sie weist einen Schirmhalter auf, der zwischen einer inneren Raststellung, in welcher der Regenschirm im Aufnahmefach eingeschlossen ist, und einer äußeren Raststellung, in welcher der Regenschirm aus dem Schirmhalter entnommen bzw. in diesen eingelegt werden kann, bewegbar ist. Beim Öffnen der Fahrzeugtür wird der Schirmhalter von einer Feder in die äußere Raststellung bewegt. Beim Schließen der Fahrzeugtür stößt ein Mitnehmer, der am Schirmhalter angeordnet ist, an einem an einem Türschweller angeordneten Anschlag an und bewegt dadurch den Schirmhalter von der äußeren in die innere Raststellung zurück. Die Erfindung hat den Vorteil, dass sowohl die Bewegung des Schirmhalters von der inneren in die äußere Raststellung als auch umgekehrt die Bewegung von der äußeren in die innere Raststellung selbsttätig durch Öffnen und Schließen der Fahrzeugtür erfolgt.

Das Aufnahmefach ist dabei in dem, zwischen der Außenwand und der Innenverkleidung gebildeten Hohlraum der Fahrzeugtüre untergebracht.

Der Schirmhalter ist vorzugsweise dreh- bzw. schwenkbar mit dem Aufnahmegehäuse verbunden und in den sich beim Öffnen der Fahrzeugtüre bildenden Freiraum zwischen Türrahmen und Fahrzeugtüre gegen den Fahrzeuginnenraum aufklappbar.

Der Schirmhalter ist ferner vorzugsweise so ausgebildet, dass der Regenschirm in der äußeren Raststellung von oben eingelegt bzw. nach oben entnommen werden kann, wobei Mittel vorgesehen werden können, die ein bequemes Erfassen des Griffes eines eingelegten Regenschirmes ermöglichen.

Solche Mittel können Abstützelemente umfassen, welche den Regenschirm im Schirmhalter so festhalten, dass der Schirmgriff in der äußeren Raststellung des Schirmhalters frei zugänglich ist.

Die Erfindung ermöglicht eine relativ schmale Bauweise des Schirmhalters mit einer entsprechend geringen Einbautiefe der Aufbewahrungsvorrichtung in der Fahrzeugtüre.

Die Bewegung des Schirmhalters von der inneren in die äußere Raststellung erfolgt vorzugsweise unter Federkraft, gegen die der Schirmhalter mittels einer manuell lösbaren Verriegelung in der inneren Raststellung im Aufnahmefach festgehalten wird.

Die Ausfahrbewegung des Schirmhalters wird vorzugsweise durch ein Bremselement gedämpft.

Durch eine Inaktivierungsmöglichkeit der Verriegelung kann erreicht werden, dass sich der Schirmhalter beim Öffnen der Fahrzeugtüre automatisch öffnet.

Das Tropfwasser eines in den Schirmhalter eingelegten Regenschirms sollte vorzugsweise in einer, im Schirmhalter bzw. im Aufnahmefach angeordneten Sammelrinne aufgefangen und einem, im Bereich der Unterseite der Fahrzeugtüre angeordneten Ablaufrohr (Wasserablauf) zugeführt werden, welches mit einem Ablassventil versehen ist, das beim Öffnen der Fahrzeugtüre das aufgefangene Tropfwasser freigibt, welches sich dadurch ins Freie entleeren kann.

Je nach Bauweise der Aufbewahrungsvorrichtung müsste dazu zwischen der Sammelrinne im Schirmhalter und dem Ablaufrohr im Aufnahmefach eine flexible Schlauchverbindung, bzw. eine an- und abkoppelbare Rohrverbindung mit einem Ventilverschluss, vorgesehen werden.

Der Vollständigkeit halber sei erwähnt, dass es im Sinne einer kinematischen Umkehr natürlich auch möglich wäre, das Aufnahmegehäuse relativ zum Schirmhalter zu bewegen und nach diesem Prinzip beispielsweise einen fest an der Fahrzeugtüre angeordneten Schirmhalter zum Einlegen bzw. Entnehmen des Regenschirmes frei zugänglich zu machen.

Zusammenfassend bietet die erfindungsgemäße Aufbewahrungsvorrichtung folgende Vorteile:
- Das Einlegen und Entnehmen des Regenschirms erfolgt außerhalb des Kfz und beansprucht somit keinen Freiraum im Fahrzeuginneren.
- Das Einlegen und Entnehmen des Regenschirms erfolgt in bequemer Sitzposition. Schon bei kleinem Oeffnungswinkel der Fahrzeugtüre kann der Regenschirm aus der Aufbewahrungsvorrichtung entnommen bzw. in diese eingelegt werden.
- Der Benützer bleibt stets trocken: Der Regenschirm kann vor dem Aussteigen aus der Aufbewahrungsvorrichtung entnommen und aufgespannt und nach dem Einsteigen zusammengeklappt und in die Aufbewahrungsvorrichtung zurückgelegt werden.
- Der nasse Regenschirm gerät nie in den Innenraum des Kfz, sodass weder Benützer noch Innenausstattung benetzt werden.
- Das Tropfwasser eines nassen Regenschirms wird in der Aufbewahrungsvorrichtung aufgefangen und beim Oeffnen der Fahrzeugtüre automatisch ins Freie entleert.
- Oeffnen und Schliessen der Aufnahmevorrichtung erfolgen automatisch, auf Knopfdruck bzw. beim Schliessen der Fahrzeugtüre.
- Die Aufbewahrungsvorrichung kann ohne grundlegende Aenderung am Fahrzeugkonzept je nach Platzverhältnissen vertikal oder horizontal in einen Leeraum der Fahrzeugtüre eingebaut werden.
- Mittel, welche in der äusseren Raststellung den Regenschirm aus dem Schirmhalter hinaus bewegen, bwz. verschiebliche oder wegklappbare Elemente des Schirmhalters zum Freilegen des Schirmgriffes, bzw. als Einführhilfe für den Regenschirm, ermöglichen eine äusserst kompakte Bauweise der Aufbewahrungsvorrichtung mit geringer Einbautiefe in der Fahrzeugtüre.

Es versteht sich, dass die erfindungsgemässe Aufbewahrungsvorrichtung nicht nur zur Aufnahme eines oder mehrerer Regenschirme geeignet ist.

Vielmehr wäre es denkbar, auch andere, insbesondere ausserhalb des Kfz benötigte und dabei Feuchtigkeit und Nässe ausgesetzte Gebrauchsgegenstände, wie beispielsweise Schneebesen und Eisschaber, in der Aufbewahrungsvorrichtung unterzubringen.

Auch ist der Einbau der erfindungsgemässen Aufbewahrungsvorrichtung nicht auf die fahrerseitige Fahrzeugtüre beschränkt.

Weitere Merkmale und Vorteile der Erfindung ergeben sich aus den Unteransprüchen bzw. aus der Beschreibung der Erfindung, welche nachstehend unter Bezugnahme auf die beigefügten Zeichnungen erläutert werden.

Es zeigen in einer skizzenhaften Darstellung:
- Fig. 1: eine erste Ausführungsform der Aufbewahrungsvorrichtung mit geöffneter Fahrzeugtüre und dem Schirmhalter in der äusseren Raststellung, in einer perspektivischer Darstellung.
- Fig. 2: die Aufbewahrungsvorrichtung gemäss Darstellung in Fig. 1, in einer Draufsicht.
- Fig. 3: einen Querschnitt durch die Aufbewahrungsvorrichtung gemäss Ausführungsform von Fig. 1 und 2 mit dem Schirmhalter in der inneren Raststellung.
- Fig. 4: die Aufbewahrungsvorrichtung gemäss Darstellung in Fig. 3 in einer Seitenansicht.
- Fig. 5: einen Querschnitt durch die Aufbewahrungsvorrichtung gemäss Ausführungsform von Fig. 1 bis 4.
- Fig. 6: die Aufbewahrungsvorrichtung gemäss Darstellung in Fig. 5 im Längsschnitt.
- Fig. 7: eine Detailansicht der Aufbewahrungsvorrichtung gemäss Darstellung in Fig. 5 und 6 in einer Draufsicht und einer Seitenansicht.
- Fig. 8: eine Detailansicht der Aufbewahrungsvorrichtung gemäss Darstellung in Fig. 5 und 6 in einer Draufsicht und einer Seitenansicht.

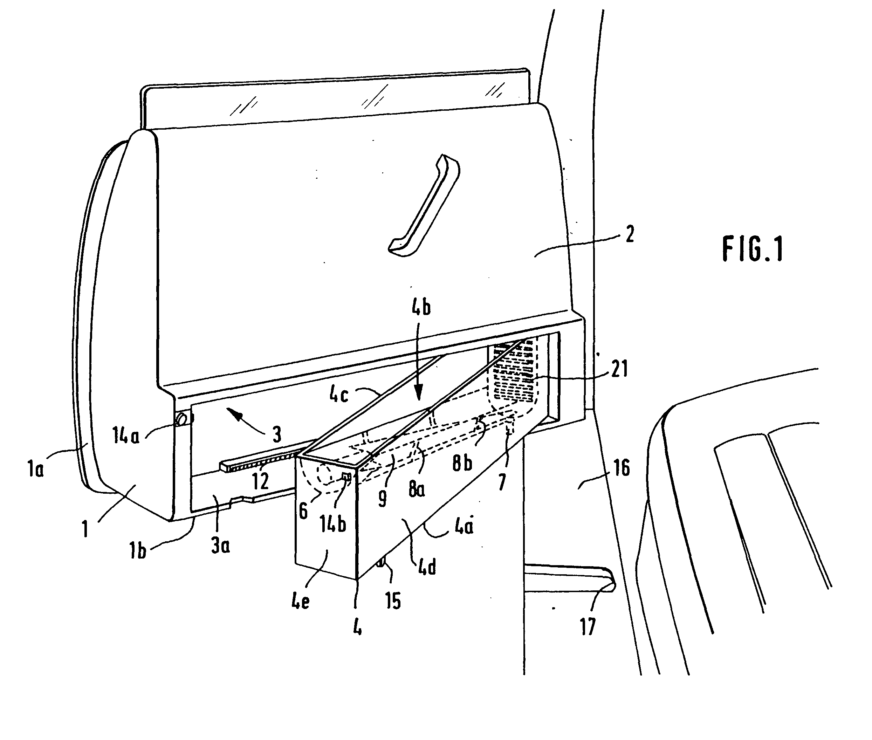

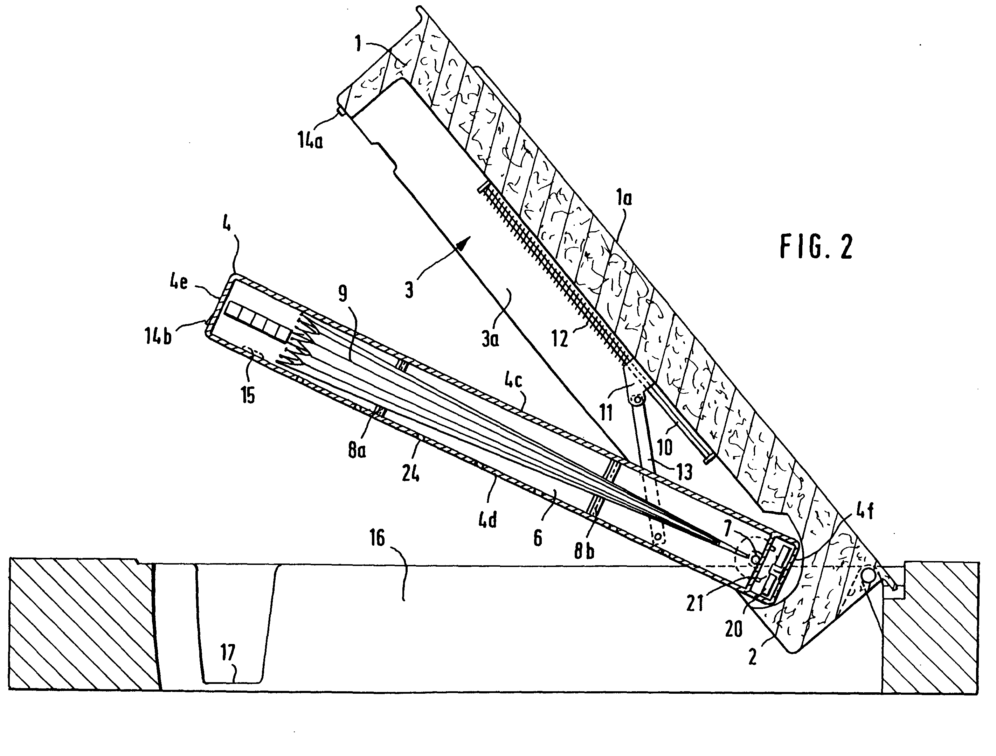

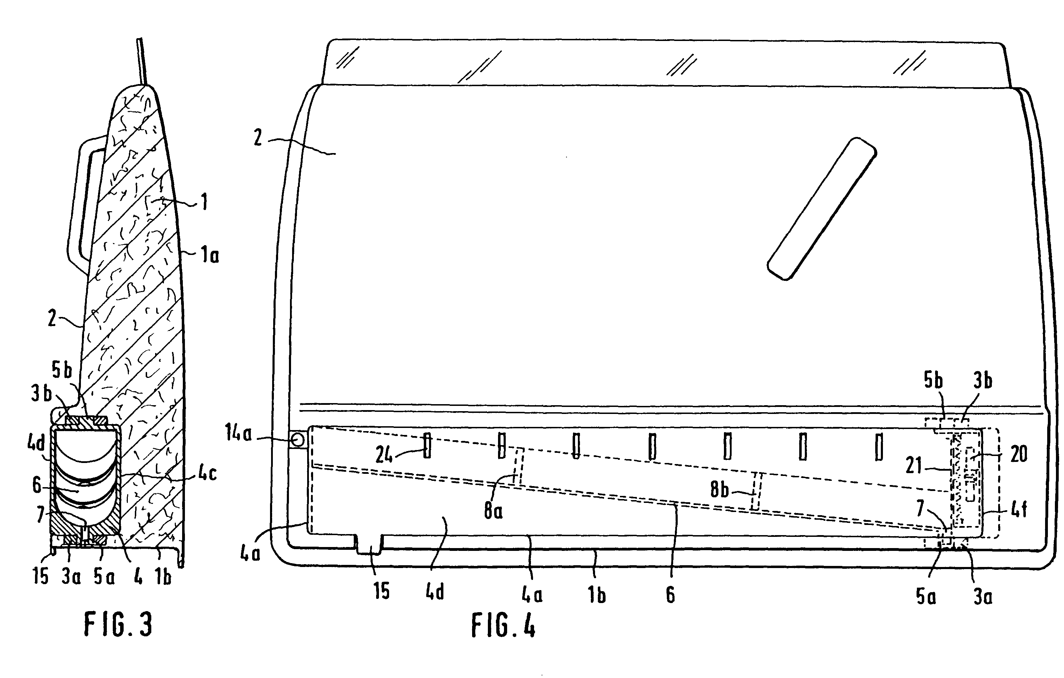

In den Figuren 1 bis 8 wird eine erste Ausführungsform der Aufbewahrungsvorrichtung dargestellt.

In der Fahrzeugtüre 1 wird zwischen der Aussenwand 1a und Innenverkleidung 2 ein Hohlraum gebildet. Im unteren Bereich des Hohlraumes ist das Aufnahmefach 3 angeordnet, welches sich im wesentlichen über die Länge der Fahrzeugtüre 1 erstreckt.

Im Aufnahmefach 3 ist der Schirmhalter 4 über die beiden senkrechten Achsen 5a, 5b in der Bodenwand 3a und in der Deckenwand 3b drehbar gelagert.

Der Schirmhalter 4 ist auf seiner Oberseite 4b offen und hat einen U-förmigen Querschnitt, gebildet aus der Rückwand 4c, der Bodenwand 4a und der Abdeckung 4d und wird auf den beiden Schmalseiten durch die Stirnwände 4e, 4f abgeschlossen.

Im Schirmhalter 4 ist mit leichter Neigung die wannenförmig ausgebildete Sammelrinne 6 angeordnet, welche an ihrem vorderen Ende ins Ablaufrohr 7 mündet, welches konzentrisch durch die Achse 5a hindurch ragt und an der Unterseite 1b der Fahrzeugtüre 1 mit einem Drehventil 18a, 18b versehen ist.

In der Sammelrinne 6 sind die beiden Schirmabstützungen 8a, 8b angeordnet, welche den Regenschirm 9 von der Sammelrinne 6 distanziert halten.

Im Aufnahmefach 3 ist die Führungsstange 10 angeordnet, auf welcher der Schlitten 11 geführt ist, der durch die Druckfeder 12 nach vorne gedrückt wird.

Ueber den am Schlitten 11 und einen an der Bodenwand 4a drehbar gelagerten Stössel 13 wird der Schirmhalter 4 bei geöffneter Fahrzeugtüre durch Lösen einer Verriegelung 14a, 14b von der inneren in die äussere Raststellung bewegt, wobei die Oeffnungsbewegung durch eine im Schlitten 11 angeordnete Reibungsbremse gedämpft wird.

In der äusseren Raststellung kann der Regenschirm 9 aus dem von oben frei zugänglichen Schirmhalter 4 entnommen bzw. in diesen eingelegt werden.

Der Schirmhalter 4 kann manuell, gegen die Kraft der Druckfeder 12, ins Aufnahmefach 3 zurückgeschwenkt werden, bis die Verriegelung 14a, 14b einrastet.

Ist der Schirmhalter 4 beim Schliessen der Fahrzeugtüre 1 in der äusseren Raststellung, erfolgt das Zurückschwenken ins Aufnahmefach 3 automatisch, indem ein Mitnehmer 15 auf einen am Türschweller 16 angeordneten Anschlag 17 auffährt und so den Schirmhalter 4 zurückhält, bis die Verriegelung 14a, 14b einrastet.

Durch Inaktivierung der Verriegelung 14a, 14b bewegt sich der Schirmhalter 4 beim Oeffnen der Fahrzeugtüre 1 automatisch in die äussere Raststellung, was die Handhabung des Regenschirmes 9 zusätzlich erleichtert.

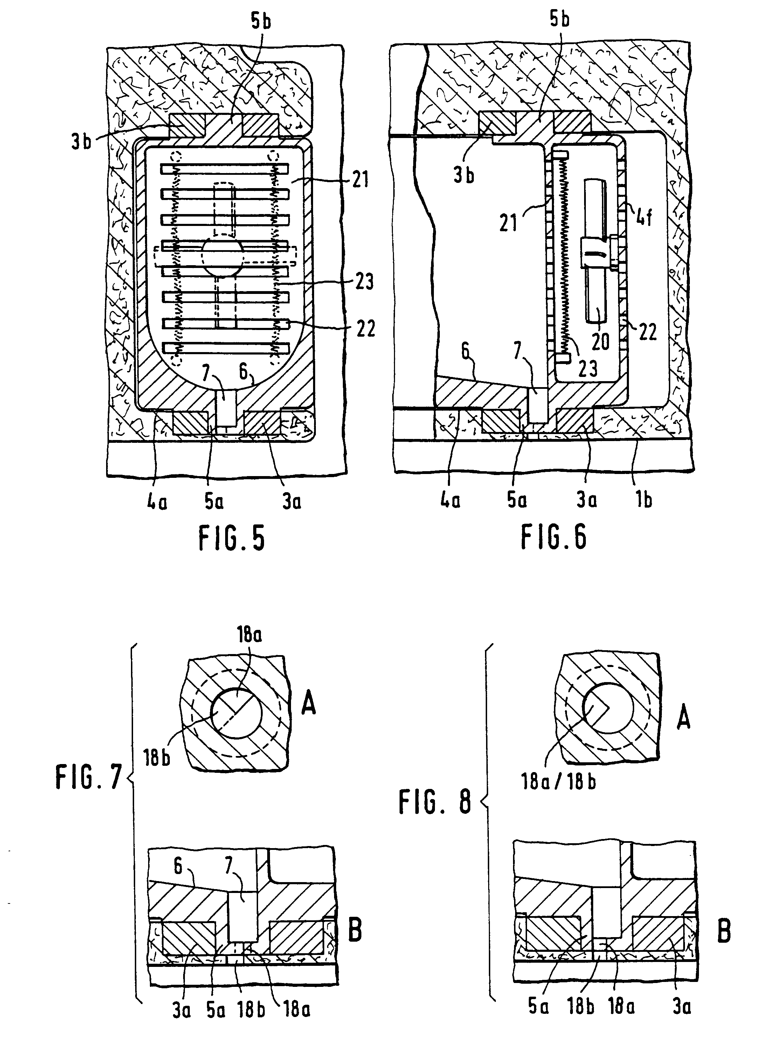

Das Tropfwasser eines in den Schirmhalter 4 eingelegten Regenschirms 9 wird in der Sammelrinne 6 aufgefangen und dem Ablaufrohr 7 zugeführt, welches durch das Drehventil 18a, 18b verschlossen ist, solange sich der Schirmhalter 4 in der inneren Raststellung befindet (Fig. 7).

Durch die Relativbewegung zwischen dem Aufnahmefach 3 und dem Schirmhalter 4 wird das Drehventil 18a, 18b übereinander gedreht, sobald der Schirmhalter 4 in die äussere Raststellung schwenkt (Fig. 8), was erst dann möglich ist, wenn die Fahrzeugtüre 1 soweit offen ist, dass sich das Drehventil 18a, 18b ausserhalb des Türschwellers 16 befindet, sodass sich das Tropfwasser ins Freie entleeren kann.

Alternativ könnte das Drehventil 18a, 18b natürlich auch durch die Oeffnungs- bzw. Schliessbewegung der Fahrzeugtüre 1 geöffnet bzw. geschlossen werden.

Am vorderen Ende des Schirmhalters 4 ist zwischen dem Ablaufrohr 7 und der vorderen Stirnwand 4f der Ventilator 20 untergebracht und durch das Lüftungsgitter 21 gegen den Innenraum des Schirmhalters 4 abgetrennt.

Der Ventilator 20 wird über das Bordnetz gespiesen und kann über einen manuell zu betätigenden Schalter oder über einen Sensor beim Einlegen des Schirmes 9 aktiviert und über einen Zeitschalter inaktiviert werden.

Die Luft zum Trocknen des Regenschirmes 9 wird durch die in der Stirnwand 4f angeordneten Luftschlitze 22 angesaugt, an den Wendeln 23 erwärmt und durch das Lüftungsgitter 21 in den Schirmhalter 4 geblasen.

Anstelle eines Ventilators können an der Abdeckung 4d auch Lüftungsschlitze 24 angeordnet sein, durch welche die Luft der fahrzeugseitigen Fussraumbelüftung in den Innenraum des Schirmhalters 4 gelangen kann.

## Patentansprüche

1. Aufbewahrungsvorrichtung, insbesondere für Regenschirme, zum Einbau in ein Aufnahmefach (3) in einer Fahrzeugtüre (1) eines Kraftfahrzeuges, mit einem Schirmhalter (4) zur Aufnahme eines Regenschirms (9), wobei der Schirmhalter (4) zwischen einer inneren Raststellung, in welcher der Regenschirm (9) im wesentlichen im Aufnahmefach (3) eingeschlossen ist, und einer äußeren Raststellung, in welcher der Regenschirm (9) aus dem Schirmhalter (4) entnommen bzw. in diesen eingelegt werden kann, beweglich und mit dem Aufnahmefach (3) verbunden ist, wobei der Schirmhalter (4) unter Krafteinwirkung einer Feder (12) von der inneren in die äußere Raststellung bewegt wird und über eine manuell lösbare Verriegelung (14a, 14b) gegen die Federkraft im Aufnahmefach (3) festgehalten wird, **dadurch gekennzeichnet, dass** am Schirmhalter (4) ein Mitnehmer (15) angeordnet ist, der beim Schließen der Fahrzeugtür (1) an einem an einem Türschweller (16) angeordneten Anschlag (17) anstößt und den Schirmhalter (4) beim Schließen der Fahrzeugtüre (1, 10') von der äußeren in die innere Raststellung bewegt.

2. Aufbewahrungsvorrichtung nach Anspruch 1, **dadurch gekennzeichnet, dass** der Schirmhalter (4) mittels einer Drehachse (5a, 5b) im Aufnahmefach (3) angelenkt ist.

3. Aufbewahrungsvorrichtung nach Anspruch 2, **dadurch gekennzeichnet, dass** die Drehachse (5a, 5b) im wesentlichen quer zum Schirmhalter (4) verläuft.

4. Aufbewahrungsvorrichtung nach Anspruch 3, **dadurch gekennzeichnet, dass** die Drehachse (5a, 5b) im Bereich einer in Fahrtrichtung vorderen Stirnwand (4f) des Schirmhalters (4, 145) angeordnet ist.

5. Aufbewahrungsvorrichtung nach Anspruch 1, **dadurch gekennzeichnet, dass** im Schirmhalter (4) eine Auffangvorrichtung (6, 7) für Tropfwasser eines nassen Regenschirmes (9) angeordnet ist.

6. Aufbewahrungsvorrichtung nach Anspruch 5, **dadurch gekennzeichnet, dass** die Auffangvorrichtung eine unterhalb des Regenschirms (9) angeordnete Sammelrinne (6) umfasst, in welcher das Tropfwasser aufgefangen und einem Wasserablauf (7) zugeführt wird.

7. Aufbewahrungsvorrichtung nach Anspruch 5, **dadurch gekennzeichnet, dass** die Auffangvorrichtung einen im Bereich der Unterseite (1b) der Fahrzeugtüre (1) angeordneten Wasserablauf (7, 18a, 18b) umfasst, und dass der Wasserablauf (7) beim Öffnen der Fahrzeugtüre (1) über den Türschweller (16) hinaus ins Freie bewegt wird.

8. Aufbewahrungsvorrichtung nach Anspruch 7, **dadurch gekennzeichnet, dass** der Wasserablauf (7) mit einem Verschlussventil (18a, 18b) versehen ist, welches durch die Bewegung der Fahrzeugtüre (1) geöffnet bzw. geschlossen wird.

9. Aufbewahrungsvorrichtung nach Anspruch 2 und 6, **dadurch gekennzeichnet, dass** die Sammelrinne (6) im Schirmhalter (4) angeordnet und dass der Wasserablauf (7) konzentrisch in der Drehachse (5b) angeordnet ist.

## Claims

1. Storage device, especially for umbrellas, for installation in a receiving compartment (3) in a vehicle door (1) of a motor vehicle, having an umbrella holder (4) for receiving an umbrella (9), the umbrella holder (4) being movable between an inner end position, in which the umbrella (9) is substantially enclosed in the receiving compartment (3), and an outer end position, in which the umbrella (9) can be removed from the umbrella holder (4) and inserted therein, and being connected to the receiving compartment (3), the umbrella holder (4) being moved under action of the force of a spring (12) from the inner to the outer end position and being held securely in the receiving compartment (3), against the spring force, by way of a manually releasable locking mechanism (14a, 14b), **characterised in that** on the umbrella holder (4) there is arranged a driver member (15), which hits against a stop (17) arranged on a door sill (16) as the vehicle door (1) closes and which moves the umbrella holder (4) from the outer to the inner end position as the vehicle door (1, 10') closes.

2. Storage device according to claim 1, **characterised in that** the umbrella holder (4) is articulatedly mounted in the receiving compartment (3) by means of a turning axle (5a, 5b).

3. Storage device according to claim 2, **characterised in that** the turning axle (5a, 5b) runs substantially transversely to the umbrella holder (4).

4. Storage device according to claim 3, **characterised in that** the turning axle (5a, 5b) is arranged in the region of a front end wall (4f), in the direction of travel, of the umbrella holder (4, 145).

5. Storage device according to claim 1, **characterised in that** a collecting arrangement (6, 7) for drip water from a wet umbrella (9) is arranged in the umbrella holder (4).

6. Storage device according to claim 5, **characterised in that** the collecting arrangement includes a collecting channel (6) arranged underneath the umbrella (9), in which collecting channel (6) the drip water is caught and taken to a water drain (7).

7. Storage device according to claim 5, **characterised in that** the collecting arrangement includes a water drain (7, 18a, 18b) arranged in the region of the underside (1b) of the vehicle door (1); and the water drain (7) is moved outwards beyond the door sill (16) to the outside as the vehicle door (1) opens.

8. Storage device according to claim 7, **characterised in that** the water drain (7) is provided with a closing valve (18a, 18b) which is opened and closed by the movement of the vehicle door (1).

9. Storage device according to claim 2 and 6, **characterised in that** the collecting channel (6) is arranged in the umbrella holder (4); and the water drain (7) is arranged concentrically in the turning axle (5b).

## Revendications

1. Dispositif de rangement, en particulier pour des parapluies, à monter dans un bac de rangement (3) de la portière (1) d'un véhicule automobile, avec un support de. parapluie (4) pour recevoir un parapluie (9), le support de parapluie (4) étant mobile entre une position de verrouillage intérieure, dans laquelle le parapluie (9) est sensiblement enfermé dans le bac de rangement (3), et une position de verrouillage extérieure, dans laquelle le parapluie (9) peut être sorti du support de parapluie (4) ou introduit dans celui-ci, et étant relié au bac de rangement (3) et le support de parapluie (4) étant déplacé de la position de verrouillage intérieure dans la position de verrouillage extérieure sous l'effet d'un ressort (12) et étant maintenu dans le bac de rangement (3) contre la force du ressort par un verrouillage pouvant être dégagé manuellement (14a, 14b), **caractérisé en ce que** sur le support de parapluie (4) est disposé un toc d'entraînement (15) qui, lors de la fermeture de la portière du véhicule (1), touche une butée (17) placée sur un bas de marche (16) et déplace le support de parapluie (4) de la position de verrouillage extérieure dans la position de verrouillage intérieure lorsque la portière de la voiture (1, 10') se ferme.

2. Dispositif de rangement selon la revendication 1, **caractérisé en ce que** le support de parapluie (4) est articulé dans le bac de rangement (3) à l'aide d'un axe de rotation (5a, 5b).

3. Dispositif de rangement selon la revendication 2, **caractérisé en ce que** l'axe de rotation (5a, 5b) s'étend sensiblement dans le sens transversal par rapport au support de parapluie (4).

4. Dispositif de rangement selon la revendication 3, **caractérisé en ce que** l'axe de rotation (5a, 5b) est disposé dans la zone d'une paroi frontale (4f) du support de parapluie (4, 145), qui est située à l'avant par rapport au sens de déplacement.

5. Dispositif de rangement selon la revendication 1, **caractérisé en ce qu'**un dispositif récepteur (6, 7) pour les gouttes d'eau d'un parapluie mouillé (9) est disposé dans le support de parapluie (4).

6. Dispositif de rangement selon la revendication 5, **caractérisé en ce que** le dispositif récepteur comprend une goulotte collectrice (6) disposée en-dessous du parapluie (9), dans laquelle les gouttes d'eau sont recueillies et dirigées vers un point d'écoulement d'eau (7) .

7. Dispositif de rangement selon la revendication 5, **caractérisé en ce que** le dispositif récepteur comprend un point d'écoulement d'eau (7, 18a, 18b) disposé dans la zone du côté inférieur (1b) de la portière du véhicule (1) et **en ce que**, lors de l'ouverture de la portière du véhicule (1), le point d'écoulement d'eau (7) est déplacé vers l'extérieur au-delà du bas de marche (16).

8. Dispositif de rangement selon la revendication 7, **caractérisé en ce que** le point d'écoulement d'eau (7) est muni d'un clapet de fermeture (18a, 18b), qui est ouvert ou fermé par le mouvement de la portière du véhicule (1).

9. Dispositif de rangement selon les revendications 2 et 6, **caractérisé en ce que** la goulotte collectrice (6) est disposée dans le support de parapluie (4) et **en ce que** le point d'écoulement (7) est disposé de manière concentrique dans l'axe de rotation (5b).
